# EUROPEAN PATENT SPECIFICATION

(11) **EP 0 844 141 B1**
(45) Date of publication and mention of the grant of the patent: **24.09.2003**
(21) Application number: 97202840.1
(22) Date of filing: 17.09.1997
(51) Int. Cl.: B60R 16/08

(54) **Vehicle hydraulic system.**
Kraftfahrzeughydrauliksystem
Système hydraulique de véhicule

(30) Priority: 27.09.1996 IT TO960789
(43) Date of publication of application: 27.05.1998
(73) Proprietor: CNH Italia S.p.A., 41100 Modena (IT)
(72) Inventor: Gregorio, Angelo, 41100 Modena (IT)
(74) Representative: Vandenbroucke, Alberic

(56) References cited:
- EP-A- 0 108 347
- EP-B- 0 376 443
- US-A- 4 707 165
- US-A- 5 078 877
- US-A- 5 289 680

## Description

The present invention relates to a vehicle hydraulic system having a hydraulic fluid reservoir and two pumps connected to the reservoir to supply hydraulic fluid to separate hydraulic circuits of the vehicle, the low pressure side of the two pumps being connected to the reservoir by way of a common filter.

In tractors and agricultural vehicles, there are several hydraulically operated loads and it is known to group such loads into two separate circuits, each having its own pump. Such a hydraulic system is disclosed in the document EP-A-0108347. The hydraulic fluid used in both circuits is drawn by the pumps from the sump of the transmission and all fluid from the hydraulic loads is also returned to the transmission for recirculation, the transmission sump thereby acting as a reservoir for the hydraulic fluid.

Air or vapour tend to find their way into the hydraulic fluid while it passes through the transmission. Trapped air can interfere with the function of the loads and it is important to bleed off as much of this air as possible from the hydraulic fluid before it reaches some sensitive loads, such as the hydraulic brakes or hydraulic steering jacks, as trapped air can result in imprecise control.

The present invention therefore seeks to provide a vehicle hydraulic system in which air is substantially removed from the hydraulic fluid before it reaches sensitive hydraulic loads.

In accordance with the invention, there is provided a vehicle hydraulic system having a hydraulic fluid reservoir and two pumps connected to the reservoir to supply hydraulic fluid to separate hydraulic circuits of the vehicle, the low pressure side of the two pumps being connected to the reservoir by way of a common filter.

The hydraulic system is characterized in that the filter comprises a housing containing a filter element that separates the interior of the housing into a first chamber connected to the reservoir and a second chamber connected to the two pumps, wherein hydraulic fluid is drawn by the two pumps from different heights within the second chamber of the filter.

The invention is predicated on the realisation that some hydraulic loads in a vehicle are more sensitive to trapped gases than others. If the flow through the filter is sufficiently slow to permit the air to separate out of the hydraulic fluid and to find its way under gravity to the top of the second chamber of the filter, then by arranging the intake pipes of the two pumps to terminate at different levels within the filter, the trapped air is directed to one hydraulic circuit in preference to the other. If loads such as the brakes and the steering that are sensitive to trapped gases are connected to the pump drawing hydraulic fluid from the lower point in the filter, then the fluid reaching such loads will contain a lower proportion of trapped gases than if both pumps were to draw hydraulic fluid from points that are at the same height in the filter. Of course, this will mean that the loads connected to the other pump will receive a greater proportion of trapped gases but to many hydraulic loads in an agricultural vehicle this would not present a serious problem.

The invention will now be described further, by way of example, with reference to the accompanying drawings, in which :
Figure 1 is a schematic diagram of a hydraulic system for an agricultural vehicle; and
Figure 2 is a section through the filter of the system shown in Figure 1.

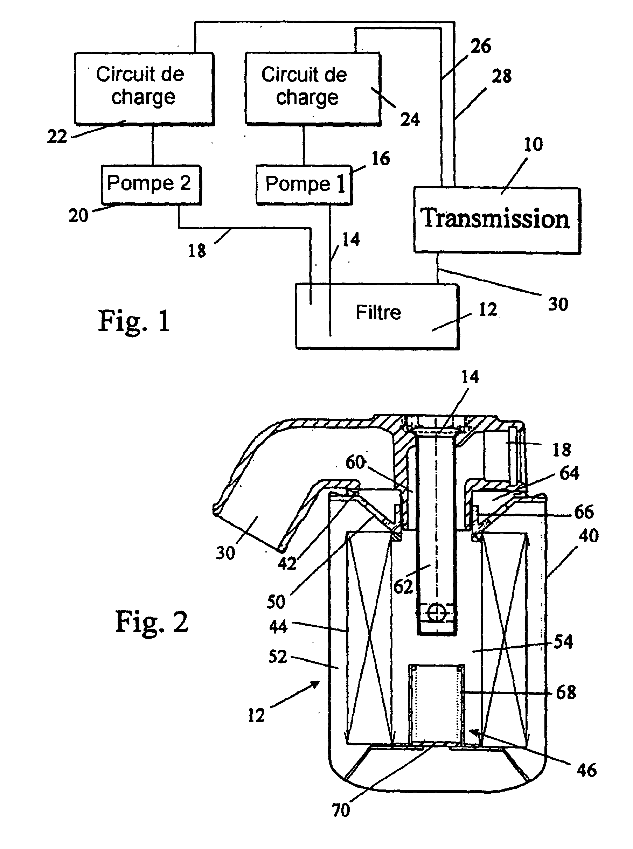

Figure 1 shows a hydraulic system comprising a transmission 10 which acts as a hydraulic fluid reservoir. The moving parts of the transmission housing 10 tend to introduce some trapped gases, which may be air or vapour, into the hydraulic fluid. Two pumps 16 and 20 draw fluid from the sump of the transmission 10 through a common filter 12. The filter 12 which will be described in greater detail below, has within it two chambers separated by a filter element. One chamber is connected to the sump of the transmission 10 by a pipe 30, while pipes 14 and 18 from the low pressure side of the two pumps 16 and 20 extend into the other chamber, terminating at different heights within the second chamber. The pumps 16 and 20 supply hydraulic fluid under pressure to different load circuits 24 and 22, the return lines 26 and 28 from which lead back to the transmission 10.

The filter 12, which is better shown in Figure 2, is made of two parts, namely a casting with three connectors for the pipes 14, 18 and 30, respectively, and a disposable canister 40 that is screwed by means of an internally threaded collar 66 onto the underside of the casting. Around the perimeter of its top face, the canister 40 is sealed relative to the casting by means of an elastic sealing ring 42. The section of the top face of the canister 40 between the collar 66 and the sealing ring 42 is dished inwards to form and annular chamber 64 that communicates with the pipe 30 through an opening in the undersurface of the casting and with the interior of the canister through a series of openings 50 that are circumferentially distributed about the internally threaded central collar 66.

The interior of the canister 40 is divided by a tubular filter element 44 into two chambers 52 and 54. The annular outer chamber 52 is connected to the pipe 30 through the openings 50 and the inner chamber 54 is connected to the pipes 14 and 18 leading to the low pressure side of the pumps 16 and 20. Both the upper and the lower surface of the filter element 44 are closed off by making sealing contact with walls of the canister. This ensures that under normal circumstances, hydraulic fluid can cross from the outer chamber 52 to the inner chamber 54 only by flowing through the filter element 44, which acts to remove from the fluid any entrained particles. However, in case the filter element should become blocked, a pressure relief valve 46 at the lower end of the canister 40 allows the filter element to be bypassed.

The valve 46 comprises a closure element 70 urged downwards, as viewed, against an annular valve seat by a spring 68. If the pressure drop across the closure element 70, corresponding to the pressure difference between the chamber 52 and 54, exceeds a predetermined value, then the element 70 lifts off its seat to prevent the hydraulic pumps and the load circuits from running dry.

The pipes 14 and 18 are connected to two concentric tubes 60 and 62 that terminate within the chamber 54. The outer tube 60 is however shorter than the inner tube 62 so that the pump connected to the pipe 18 draws fluid from the top of the chamber 54 while the other pump draws fluid from a point that is lower down in the chamber 52.

The cross sectional area of the pipe 30 is dimensioned to be less than that of the openings 50 in order to promote smooth fluid flow through the filter element 44. After passing through the filter element 44 and entering the chamber 54, trapped gas bubbles tend to rise under gravity to the top of the chamber 54. For this reason, trapped gas will tend to find its way into the pipe 18 in preference to the pipe 14. The pipe 14 is therefore used by the pump connected to the loads that are more severely impaired by trapped gases, such as the braking and steering system, while the pipe 18 is used to supply the pump connected to other less sensitive loads.

If the two pumps have different delivery rates, then the pump with the higher delivery rate should be used to draw fluid from the higher point in the chamber 54 and to supply the less sensitive loads.

## Claims

1. A vehicle hydraulic system having a hydraulic fluid reservoir (10) and two pumps (16, 20) connected to the reservoir (10) to supply hydraulic fluid to separate hydraulic circuits (24, 22) of the vehicle, the low pressure side of the two pumps (24, 22) being connected to the reservoir (10) by way of a common filter (12); and
**characterized in that** the filter (12) comprises a housing containing a filter element (44) which separates the interior of the housing into a first chamber (52) connected to the reservoir (10) and a second chamber (54) connected to the two pumps (16, 20) wherein hydraulic fluid is drawn by the two pumps (16, 20) from different heights within the second chamber (54) of the filter.

2. A vehicle hydraulic system according to claim 1 **characterized in that** the filter element (44) is annular and the second chamber (54) lies within the filter element (44).

3. A vehicle hydraulic system according to claims 1 or 2, **characterized in that** two concentric outlet pipes (60, 62) are provided in the filter (12), the inner pipe (62) connected to one of the pumps (20) penetrating deeper into the second chamber (54) than the outer pipe (60) which is connected to the other pump (16).

4. A vehicle hydraulic system according to any of the preceding claims **characterized in that** the filter housing defines an annular chamber (64) connected by a supply pipe (30) to the hydraulic fluid reservoir (10) and communicating with the first chamber (52) by way of a plurality of openings (50) circumferentially distributed about the annular chamber.

5. A vehicle hydraulic system according to claim 4 **characterized in that** the cross sectional area of the supply pipe (30) is less than the sum of the cross sectional areas of the said plurality of openings (50).

6. A vehicle hydraulic system according to any of the preceding claims **characterized in that** the pump (20) drawing hydraulic fluid from the higher point in the second chamber (54) of the filter (12) has a higher delivery rate than the other pump (16).

## Patentansprüche

1. Kraftfahrzeug-Hydrauliksystem mit einem Hydraulikflüssigkeits-Vorratsbehälter (10) und zwei Pumpen (16, 20), die mit dem Vorratsbehälter (10) verbunden sind, um Hydraulikflüssigkeit an getrennte Hydraulikkreise (24, 22) des Fahrzeugs zu liefern, wobei die Niederdruckseite der beiden Pumpen (24, 22) mit dem Vorratsbehälter (10) über einen gemeinsamen Filter (12) verbunden ist,
- **dadurch gekennzeichnet, dass** der Filter (12) ein Gehäuse aufweist, das ein Filterelement (44) enthält, das das Innere des Gehäuses in eine erste, mit dem Vorratsbehälter (10) verbundene Kammer und eine zweite, mit den zwei Pumpen (16, 20) verbundene Kammer unterteilt, wobei Hydraulikflüssigkeit von den beiden Pumpen (16, 20) an unterschiedlichen Höhen innerhalb der zweiten Kammer (44) des Filters abgezogen wird.

2. Kraftfahrzeug-Hydrauliksystem nach Anspruch 1, **dadurch gekennzeichnet, dass** das Filterelement (44) ringförmig ist und die zweite Kammer (54) im Inneren des Filterelements (44) liegt.

3. Fahrzeug-Hydrauliksystem nach Anspruch 1 oder 2, **dadurch gekennzeichnet, dass** zwei konzentrische Auslassrohre (60, 62) in dem Filter (12) vorgesehen sind, wobei das mit einer der Pumpen (20) verbundene innere Rohr (62) tiefer in die zweite Kammer (54) eindringt, als das mit der anderen Pumpe (16) verbundene äussere Rohr (60).

4. Kraftfahrzeug-Hydrauliksystem nach einem der vorhergehenden Ansprüche, **dadurch gekennzeichnet, dass** das Filtergehäuse eine ringförmige Kammer (64) begrenzt, die über ein Zuführungsrohr (30) mit dem Hydraulikflüssigkeits-Vorratsbehälter (10) verbunden ist, und die mit der ersten Kammer (52) über eine Vielzahl von Öffnungen (50) in Verbindung steht, die in Umfangsrichtung um die ringförmige Kammer herum verteilt sind.

5. Kraftfahrzeug-Hydrauliksystem nach Anspruch 4, **dadurch gekennzeichnet, dass** die Querschnittsfläche des Zuführungsrohrs (30) kleiner als die Summe der Querschnittsflächen der Anzahl von Öffnungen (50) ist.

6. Kraftfahrzeug-Hydrauliksystem nach einem der vorhergehenden Ansprüche, **dadurch gekennzeichnet, dass** die Pumpe (20), die Hydraulikflüssigkeit von dem höher gelegenen Punkt in der zweiten Kammer (54) des Filters (12) abzieht, eine höhere Förderrate als die andere Pumpe (16) aufweist.

## Revendications

1. Un système hydraulique pour véhicule pourvu d'un réservoir de fluide hydraulique (10) et de deux pompes (16, 20) raccordées au réservoir (10) pour alimenter les circuits hydrauliques séparés (24, 22) du véhicule en fluide hydraulique, le côté basse pression des deux pompes (24, 22) étant raccordé au réservoir (10) au moyen d'un filtre commun (12); et
**caractérisé en ce que** le filtre (12) comporte un logement contenant un élément de filtre (44) qui sépare l'intérieur du logement en une première chambre (52) raccordée au réservoir (10) et en une deuxième chambre (54) raccordée aux deux pompes (16, 20), dans lesquelles le fluide hydraulique est soutiré par les deux pompes (16, 20) à partir de hauteurs différentes dans la seconde chambre (54) du filtre.

2. Système hydraulique pour véhicule selon la revendication 1 **caractérisé en ce que** l'élément de filtre (44) est annulaire et que la seconde chambre (54) se trouve dans l'élément de filtre (44).

3. Système hydraulique pour véhicule selon la revendication 1 ou 2, **caractérisé en ce que** deux tuyaux d'évacuation concentriques 60, 62) sont prévus dans le filtre (12), le tuyau intérieur (62) raccordé à l'une des pompes (20) pénétrant plus profondément dans la seconde chambre (54) que le tuyau extérieur (60) raccordé à l'autre pompe (16).

4. Système hydraulique pour véhicule selon l'une quelconque des revendications précédentes, **caractérisé en ce que** le logement de filtre définit une chambre annulaire (64) raccordée au réservoir de fluide hydraulique (10) par un tuyau d'alimentation (30) et communiquant avec la première chambre (52) via plusieurs ouvertures (50) réparties circonférentiellement autour de la chambre annulaire.

5. Système hydraulique pour véhicule selon la revendication 4 **caractérisé en ce que** la section transversale du tuyau d'alimentation (30) est inférieure à la somme des sections transversales de ladite pluralité d'ouvertures (50).

6. Système hydraulique pour véhicule selon l'une quelconque des revendications précédentes **caractérisé en ce que** la pompe (20) soutirant le fluide hydraulique du point plus élevé dans la seconde chambre (54) du filtre (12) possède un débit plus élevé que l'autre pompe (16).
